# FASCICULE DE BREVET EUROPEEN

(11) **EP 0 551 326 B1**
(45) Date de publication et mention de la délivrance du brevet: **01.03.1995**
(21) Numéro de dépôt: 91917129.8
(22) Date de dépôt: 26.09.1991
(51) Int. Cl.: A22C 25/17, A23N 7/01

(54) **PROCEDE ET DISPOSITIF POUR LE PELAGE DE PRODUITS ALIMENTAIRES TELS QUE DES POISSONS, DES FRUITS OU DES LEGUMES**
VERFAHREN UND VORRICHTUNG ZUM SCHÄLEN VON NAHRUNGSPRODUKTEN WIE FISCHEN, FRÜCHTEN UND GEMÜSE
METHOD AND DEVICE FOR PEELING FOOD SUCH AS FISH, FRUITS OR VEGETABLES

(30) Priorité: 28.09.1990 FR 9012026
(43) Date de publication de la demande: 21.07.1993
(73) Titulaire: PROTIAL, 49071 Beaucouze (FR)
(72) Inventeur: ROUSSEL, Hervé, F-85340 Olonne-sur-Mer (FR); HERMANT, Jean-Jacques, F-49300 Cholet (FR); DALLA-SERRA, Lionel Chez Monsieur Caroff, F-44810 Heric (FR)
(74) Mandataire: Dawidowicz, Armand
(86) Numéro de dépôt international: FR9100754
(87) Numéro de publication internationale: WO9205704

(56) Documents cités:
- FR-A- 1 560 456
- GB-A- 792 651
- GB-A- 1 463 262
- GB-A- 2 160 757
- US-A- 1 921 055
- US-A- 3 024 821
- US-A- 3 276 496
- US-A- 3 413 039
- US-A- 3 480 057
- US-A- 3 706 333
- US-A- 4 765 030
- PATENT ABSTRACTS OF JAPAN, volume 9, No 78, 6 April 1985

## Description

La présente invention concerne un procédé de pelage de produits alimentaires tels que des poissons, entiers ou non, par exemple des sardines, des harengs, des anchois, etc, des fruits tels que des pêches, ou des légumes tels que des tomates, ainsi qu'un dispositif pour la mise en oeuvre du procédé selon les préambules des revendications 1 respectivement 8. Un tel procédé et dispositif sont connus du US-A-3024821.

Le pelage des poissons, et plus particulièrement des sardines, est une opération délicate qui est effectuée la plupart du temps sur des poissons a l'état de filets. Le pelage réalisé automatiquement ou manuellement comprend la fixation du poisson sur un support et la découpe de la peau au moyen d'éléments tranchants. Ces dispositifs mécaniques tranchants présentent pour la plupart des difficultés de réglage au niveau des lames, couteaux et convoyeurs, ce qui entraîne une perte en qualité et un rendement pondéral plus faible des filets pelés par ces procédés.

D'autres procédés, tels que celui décrit dans GB-A-2.116.829, consistent, après chauffage superficiel de la peau du poisson, à immerger ce dernier dans un milieu aqueux et à le nettoyer à l'aide de brosses constituées par des rouleaux rotatifs. Dans GB-A-2.160.757, le brossage est remplacé par une pulvérisation de jets d'eau froide sous pression.

Un dernier procédé appliqué aujourd'hui industriellement consiste à mettre en contact la peau des poissons avec la surface d'un tambour réfrigéré et à séparer la peau congelée instantanément au moyen d'un couteau ruban continu.

Tous les procédés et dispositifs décrits ci-dessus sont appliqués sur des poissons de préférence de grande taille se présentant à l'état de filets et dont la taille doit être relativement homogène pour éviter des pertes qualitatives et quantitatives trop importantes.

Dans le cas de fruits tels que des pêches, il est connu d'effectuer un prétraitement chimique par bain dans de la soude diluée additionnée de produits mouillants a une température de l'ordre de 90°C, puis pelage par passage sur des disques abrasifs en caoutchouc. Ce procédé, impliquant l'utilisation d'agents chimiques et d'une température relativement élevée, est très nuisible sur la qualité du produit obtenu.

En ce qui concerne les légumes tels que des tomates, il est usuel d'utiliser des procédés chimiques et/ou la vapeur d'eau. Là encore, le produit pelé obtenu est en général dégradé et le procédé ne convient pas pour le pelage de produits alimentaires fragiles.

On connaît en outre, par JP-A-59.210877 un procédé de pelage de tomates consistant à préchauffer les tomates et à les mettre en contact avec un courant d'air chaud tout en les faisant tourner sur elles-mêmes. Un tel procédé nécessite une installation volumineuse et coûteuse et ne peut s'appliquer à des produits plats et/ou allongés tels que des filets de poisson.

Dans certains cas particuliers tels que les chataîgnes ou les oignons, il est connu de brûler la peau puis de l'enlever par soufflage d'air comprimé ou par aspiration. Un tel procédé n'a pas une application générale.

L'un des buts de la présente invention est donc de proposer un procédé de pelage industriel applicable notamment sur des poissons de petite taille et de dimensions non calibrées, que ces derniers soient entiers, éviscérés, étêtés ou préparés sous forme de filets, ou sur des fruits ou légumes fragiles et/ou à chair molle et de dimensions non calibrées.

Un autre but de l'invention est de proposer un dispositif continu ou discontinu pour la mise en oeuvre de ce procédé qui n'abîme pas le produit alimentaire mais permette au contraire d'obtenir des produits pelés dont l'état de surface est remarquable.

L'invention concerne à cet effet un procédé et un dispositif selon les revendications respectives 1 et 8.

D'autres caractéristiques et avantages de l'invention apparaîtront encore à la lecture détaillée de la description qui suit en égard aux dessins ci-annexés, lesquels description et dessins sont bien entendu donnés surtout à titre d'exemple.

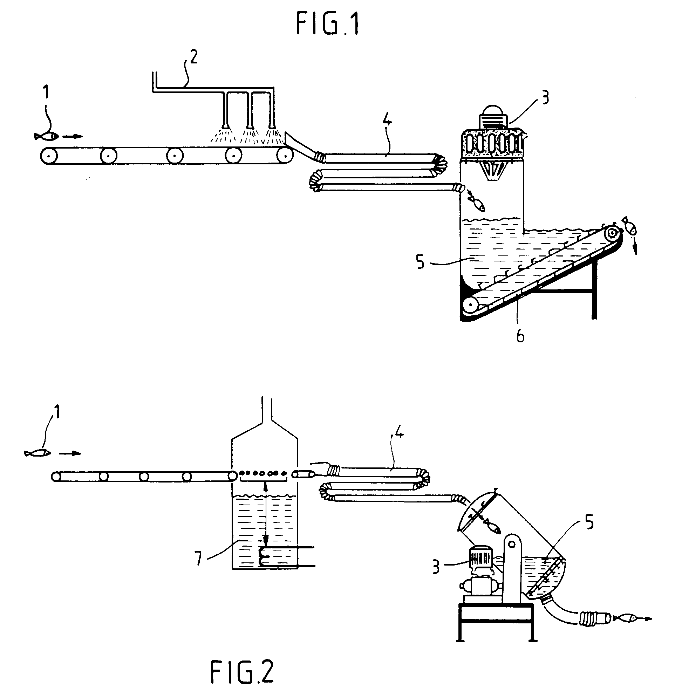

La figure 1 représente une vue schématique d'un dispositif de pelage incluant des moyens de récupération de poissons pelés conforme à l'objet de l'invention; la figure 2 représente une vue schématique d'une autre forme de réalisation des moyens de récupération de poissons pelés inclus dans le dispositif de pelage conforme à l'invention.

L'exemple décrit se réfère à des poissons ou filets de poisson mais le procédé et le dispositif de l'invention s'appliquent à d'autres produits alimentaires tels que des fruits ou des légumes. Conformément aux figures 1 et 2, il convient dans un premier temps, pour faciliter l'étape de pelage proprement dite, de soumettre les poissons ou filets de poissons à peler à un traitement thermique qui a pour fonction de faire fondre la couche lipidique sous-cutanée et de fragiliser la peau. Ce traitement thermique superficiel est réalisé de manière classique par trempage ou aspersion avec de l'eau chaude. Les couples temps-température sont fonction des poissons à traiter et de la taille de ces derniers. Les traitements couramment pratiqués sur des sardines de taille moyenne sont par exemple de deux minutes à 60°C, de dix secondes à 90°C ou de deux secondes à 100°C. Tout autre type de traitement thermique, tel que par exemple l'aspersion par un jet de vapeur, un gaz chaud ou un rayonnement infrarouge, peut être envisagé. A l'issue de ce traitement thermique, le poisson ou le filet de poisson est immédiatement introduit dans une canalisation 4 à l'intérieur de laquelle circule au moins un flux d'air généré par compression ou dépression. Par l'intermédiaire du ou des flux générés, le poisson se déplace à l'intérieur de la canalisation. Lorsqu'il débouche de celle-ci, il est entièrement pelé. Selon la configuration de la canalisation, le pelage est réalisé par contact du poisson avec les parois intérieures de la canalisation ou par déplacement d'air sur la surface des poissons. Ainsi, si on veut favoriser le pelage par contact, la canalisation peut présenter des moyens de rétention de la peau tels que, par exemple, des cannelures ou des stries ou même encore des systèmes de brosses disposées radialement à l'intérieur de la canalisation, ladite canalisation se présentant sous forme rigide. Si on désire au contraire réaliser l'enlèvement de la peau par déplacement d'air à la surface du corps du poisson, la canalisation est munie de différentes entrées permettant l'envoi simultané de plusieurs flux dans diverses directions. On peut ainsi réaliser une canalisation munie radialement d'orifices permettant l'introduction de flux d'air qui viennent compléter le flux d'air principal à déplacement longitudinal par rapport à la canalisation. Il est possible également de combiner les moyens d'enlèvement de la peau par contact et par déplacement d'air dans le cas d'applications très spécifiques.

Quant au flux d'air lui-même, il peut être généré par compression ou dépression à l'aide d'une turbine soufflante ou aspirante ou d'un compresseur.

A la sortie de la canalisation, le poisson est nettoyé des restes de peau et récupéré pour subir d'autres traitements.

Pour la mise en oeuvre de ce procédé, le dispositif comprend, par exemple, conformément à la figure 1, un dispositif de traitement thermique 2 constitué de canalisations à l'intérieur desquelles circule de la vapeur qui est projetée sur les poissons 1 avançant sur tapis roulants. Ce traitement thermique est de courte durée. Il n'a aucune conséquence sur la durée de conservation du produit pelé. A l'issue du traitement thermique, le poisson 1 est aspiré à l'intérieur de la canalisation 4 et circule à l'intérieur de celle-ci pendant 1 à 5 secondes pour venir ensuite se déverser dans le réceptacle 5 rempli d'eau glacée. La canalisation présente ou non des coudes et ses parois intérieures sont lisses ou munies de cannelures ou stries, de préférence radiales, circulaires ou hélicoïdales. La vitesse de déplacement du poisson à l'intérieur de la canalisation est variable et est de préférence comprise entre 0,5 et 50m/s. Cette vitesse est fonction du poisson, de la taille de la canalisation et de la force d'aspiration ou de soufflage. Le diamètre de la canalisation est de l'ordre de 0,1 à 20cm. L'air circulant à l'intérieur de la canalisation est produit par une turbine aspirante 3 classique qui équipe notamment les aspirateurs industriels.

Lorsque le poisson débouche de la canalisation, il est pelé. La majeure partie de la peau est séparée par frottement sur les parois intérieures de la canalisation. Le poisson et les fragments de poisson aboutissent dans un réceptacle 5 contenant de l'eau réfrigérée. Ce réceptacle permet également la récupération de la fraction lipidique. Le poisson est récupéré de manière continue grâce à un système de convoyage immergé 6 et est ensuite rincé par jet d'eau pour éliminer les fragments de peau restants. L'enchaînement rapide des étapes permet au poisson de ne pas être affecté par le traitement thermique. De plus, l'immersion dans un bain glacé permet de stopper très rapidement le transfert calorique.

La figure 2 représente une autre forme de réalisation de l'invention dans laquelle le traitement thermique est réalisé par immersion des poissons 1 dans de l'eau chaude 7 et l'évacuation des poissons s'effectue manuellement par vidange du réceptacle 5.

Bien évidemment, le procédé et le dispositif décrits ci-dessus applicables à tout type de poisson ou de filet de poisson, peuvent être disposés de manière à travailler en série. Il est ainsi possible d'équiper le dispositif d'un grand nombre de canalisations 4.

Il est bien évident que l'invention ne se limite pas aux formes de réalisation représentées ci-dessus mais en englobe au contraire toutes les variantes de réalisation. Elle s'applique en particulier à d'autres produits alimentaires tels que, par exemple, des légumes ou des. fruits.

Dans le cas de fruits tels que des pêches ou de légumes tels que des tomates, le traitement superficiel préalable de la peau pourra être remplacé ou complété par un traitement chimique tel qu'une aspersion ou un trempage avec de la soude.

Dans le cas de produits lourds tels que des thons, il est difficile, sinon exclu, d'entraîner le produit par soufflage ou aspiration d'air. Dans ce cas, on peut utiliser la seule gravité du produit, tel qu'un thon entier, en donnant à la canalisation 4 une configuration, de type hélicoïdal ou comportant des formes arrondies, telle que la totalité de la peau soit successivement en contact de frottement avec la paroi interne de la canalisation 4.

Dans l'exemple décrit, le traitement superficiel du produit est effectué préalablement au déplacement dans la canalisation 4.

Il est également possible d'effectuer un tel traitement superficiel, en particulier de chauffage, partiellement ou totalement dans la canalisation 4 qui sera alors munie dans sa portion initiale de moyens de traitement superficiel, par exemple de chauffage par infrarouge, par aspersion d'eau chaude et/ou de vapeur et/ou de gaz chaud. On pourra prévoir un gradient croissant de ce traitement superficiel, par exemple une température croissante.

## Revendications

1. Procédé de pelage de produits alimentaires comportant une peau tels que des poissons, entiers ou non, par exemple, des sardines, des harengs, des anchois etc., des fruits tels que des pêches, ou des légumes tels que des tomates, dans lequel on soumet la peau à un traitement supeficiel et on déplace lesdits produits alimentaires en contact de frottement avec une paroi rugueuse,
caractérisé en ce que ladite paroi rugueuse est la paroi interne d'une canalisation rigide (4) formant un moyen de guidage des produits à peler et on fait circuler un flux d'air généré par compression ou dépression à l'intérieur de ladite canalisation rigide (4).

2. Procédé de pelage selon la revendication 1,
caractérisé en ce que la circulation d'air à l'intérieur de la canalisation (4) est omnidirectionnelle, et plus particulièrement radiale et axiale.

3. Procédé de pelage selon la revendication 1,
caractérisé en ce que la circulation d'air à l'intérieur de la canalisation (4) est unidirectionnelle.

4. Procédé de pelage selon l'une des revendications 1 à 3,
caractérisé en ce qu'on génère un flux d'air à l'aide d'une turbine soufflante ou aspirante (3) ou d'un compresseur.

5. Procédé de pelage selon la revendication 1,
caractérisé en ce que le déplacement du produit alimentaire est fait par gravité, la canalisation (4) ayant une conformation apte à produire successivement le frottement sur la totalité de la peau.

6. Procédé de pelage selon l'une des revendications 1 à 5,
caractérisé en ce qu'on chauffe la peau par trempage et/ou aspersion d'eau chaude et/ou de vapeur et/ou de gaz chaud, et/ou par rayonnement infrarouge, ledit chauffage ayant lieu avant le déplacement dans la canalisation (4) et/ou dans une portion initiale de ladite canalisation (4).

7. Procédé de pelage selon l'une des revendication 1 a 5,
caractérisé en ce qu'on fait subir préalablement à la peau un traitement chimique.

8. Dispositif pour la mise en oeuvre du procédé selon l'une des revendications 1 à 7,
comprenant au moins un moyen de guidage (4) à l'intérieur duquel circulent les produits alimentaires (1) à peler, la surface interne dudit moyen de guidage (4) présentant un coefficient de friction suffisant pour séparer la peau préalablement traitée,
caractérisé en ce que ladite surface est la surface interne d'une canalisation rigide (4) formant un moyen de guidage des produits à peler et en ce qui'il comporte des moyens pour faire circuler un fluse d'air généré par compression ou dépression à l'intérieur de ladite canalisation rigide.

9. Dispositif selon la revendication 8,
caractérisé en ce que le moyen de guidage est une canalisation (4) ouverte en au moins deux points.

10. Dispositif selon l'une des revendications 8 et 9,
caractérisé en ce que les parois intérieures du moyen de guidage (4) sont munies d'éléments de rétention de la peau, et plus particulièrement de stries radiales circulaires ou hélicoïdales.

11. Dispositif selon l'une des revendications 8 à 10,
caractérisé en ce que les moyens de récupération des produits pelés et/ou des fragments de peau desdits produits et/ou de la fraction lipidique desdits produits sont constitués par des réceptacles disposés à l'extrémité de sortie dudit moyen de guidage (4).

## Claims

1. A process for removing the skin from foodstuffs comprising a skin such as fish, whole or otherwise, for example sardines, herrings, anchovies etc, from fruits such as peaches, or vegetables such as tomatoes, in which the skin undergoes a superficial treatment and the said foodstuffs are moved in frictional contact with a rough surface, characterised in that the said rough surface is the inner surface of rigid piping (4) forming a means for guiding the products to be skinned, and a flow of air generated by compression or a partial vacuum is circulated inside the said rigid piping (4).

2. A process for removing skin according to claim 1, characterised in that the circulation of air inside the piping (4) is omnidirectional and in particular radial and axial.

3. A process for removing skin according to claim 1, characterised in that the circulation of air inside the piping (4) is unidirectional.

4. A process for removing skin according to any of claims 1 to 3, characterised in that a flow of air is generated with the aid of an extracting or blowing turbine (3) or of a compressor.

5. A process for removing skin according to claim 1, characterised in that the movement of the food product is achieved by gravity, the pipe (4) being of a form able successively to produce friction on the whole skin.

6. A process for removing skin according to any of claims 1 to 5, characterised in that the skin is heated by steeping in and/or spraying with hot water and/or steam and/or hot gas and/or by infrared radiation, the said heating taking place prior to the movement in the piping (4) and/or in an initial portion of the said piping (4).

7. A process for removing skin according to any of claims 1 to 5, characterised in that the skin is firstly subjected to a chemical treatment.

8. A device for carrying out the process according to one of claims 1 to 7, comprising at least one guide means (4), inside which the foodstuffs (1) to be skinned are moved, the inner surface of the said guide means (4) having a friction coefficient which is sufficient to separate the previously treated skin, characterised in that the said surface is the inner surface of rigid piping (4) forming a means for guiding products to be skinned and in that it comprises means for causing a flow of air generated by compression or a partial vacuum to circulate inside the said rigid piping.

9. A device according to claim 8, characterised in that the guide means is piping which is open at at least two points.

10. A device according to one of claim 8 and 9, characterised in that the inner surfaces of the guide means (4) are provided with elements for gripping the skin, and more particularly of radial, circular or spiral ridges.

11. A device according to any of claims 8 to 10, characterised in that the means for recovering the skinned products and/or the fragments of skin of the said products and/or the lipid fraction of the said products are comprised of receptacles disposed at the output end of the said guide means (4).

## Patentansprüche

1. Verfahren zum Schälen von Nahrungsprodukten mit einer Haut wie etwa von Fischen, ganz oder nicht ganz, beispielsweise Sardinen, Heringe, Sardellen usw., von Früchten wie etwa Pfirsichen oder von Gemüse wie etwa Tomaten, wobei die Haut einer Oberflächenbehandlung unterzogen wird und die besagten Nahrungsprodukte in Reibkontakt mit einer rauhen Wand bewegt werden, **dadurch gekennzeichnet**, daß es sich bei der besagten rauhen Wand um die Innenwand einer starren Leitung (4) handelt, die ein Führungsmittel für die zu schälenden Produkte bildet, und daß man einen durch Verdichtung oder Unterdruck erzeugten Luftstrom im Innern der besagten starren Leitung (4) zirkulieren läßt.

2. Schälverfahren nach Anspruch 1, **dadurch gekennzeichnet**, daß die Luftzirkulation im Innern der Leitung (4) in allen Richtungen erfolgt, und zwar radial und axial.

3. Schälverfahren nach Anspruch 1, **dadurch gekennzeichnet**, daß die Luftzirkulation im Innern der Leitung (4) in einer Richtung erfolgt.

4. Schälverfahren nach einem der Ansprüche 1 bis 3, **dadurch gekennzeichnet**, daß ein Luftstrom mit Hilfe einer Blas- oder Saugturbine (3) oder eines Verdichters erzeugt wird.

5. Schälverfahren nach Anspruch 1, **dadurch gekennzeichnet**, daß die Bewegung des Nahrungsprodukts durch Schwerkraft erfolgt, wobei die Leitung (4) so ausgeformt ist, daß nacheinander die Reibung an der Gesamtheit der Haut herbeigeführt werden kann.

6. Schälverfahren nach einem der Ansprüche 1 bis 5, **dadurch gekennzeichnet**, daß die Haut durch Eintauchen in und/oder Besprühen mit heißem Wasser und/oder Dampf und/oder Heißgas und/oder durch Infrarotbestrahlung erhitzt wird, wobei diese Erhitzung vor der Bewegung in der Leitung (4) und/oder in einem Anfangsabschnitt der Leitung (4) erfolgt.

7. Schälverfahren nach einem der Ansprüche 1 bis 5, **dadurch gekennzeichnet**, daß die Haut zuvor einer chemischen Behandlung unterzogen wird.

8. Vorrichtung für die Anwendung des Verfahrens nach einem der Ansprüche 1 bis 7, die mindestens ein Führungsmittel (4) enthält, in dessen Innern die zu schälenden Nahrungsprodukte (1) umlaufen, wobei die Innenfläche dieses Führungsmittels (4) einen ausreichenden Reibungskoeffizienten aufweist, um die zuvor behandelte Haut abzutrennen , **dadurch gekennzeichnet**, daß es sich bei der besagten Fläche um die Innenfläche einer starren Leitung (4) handelt, die ein Führungsmittel für die zu schälenden Produkte bildet, und daß sie Mittel umfaßt, um einen Luftstrom, der durch Verdichtung oder Unterdruck erzeugt wird, im Innern der starren Leitung zirkulieren zu lassen.

9. Vorrichtung nach Anspruch 8 , **dadurch gekennzeichnet**, daß es sich bei dem Führungsmittel um eine zumindest an zwei Stellen offene Leitung (4) handelt.

10. Vorrichtung nach einem der Ansprüche 8 und 9, **dadurch gekennzeichnet**, daß die Innenwände des Führungsmittels (4) mit Elementen zum Zurückhalten der Haut, insbesondere mit kreisförmigen oder spiralförmigen radialen Rillen versehen sind.

11. Vorrichtung nach einem der Ansprüche 8 bis 10, **dadurch gekennzeichnet**, daß die Mittel zur Aufnahme der geschälten Produkte und/oder der Hautfragmente dieser Produkte und/oder der Lipidfraktion dieser Produkte aus Auffangbehältern bestehen, die am Ausgang des besagten Führungsmittels (4) angeordnet sind.
